# EUROPÄISCHE PATENTANMELDUNG

(11) **EP 4 102 480 A1**
(43) Veröffentlichungstag der Anmeldung: **14.12.2022**
(21) Anmeldenummer: 22178314.5
(22) Anmeldetag: 10.06.2022
(51) Int. Cl.: G08C 17/02

(54) **SYSTEM ZUR RÄUMLICH BEGRENZTEN AKTIVIERUNG EINER STEUEREINHEIT**

(30) Priorität: 10.06.2021 AT 5012221 U
(71) Anmelder: Ars Electronica Linz GmbH & Co KG, 4040 Linz (AT)
(72) Erfinder: Dobusch, Manuel, 4050 Traun (AT); Schmid, Simon, 4040 Linz (AT)
(74) Vertreter: Schwarz & Partner Patentanwälte GmbH

(57) **Zusammenfassung**

Die Erfindung betrifft ein System (1) zur räumlich begrenzten Aktivierung einer Steuereinheit (2), umfassend eine Aktivierungseinheit (7) und eine Benutzereinheit (8), die dazu ausgebildet ist, das Steuersignal mittelbar oder unmittelbar an die Aktivierungseinheit (7) zu senden, wobei das System (1) ferner eine Relaiseinheit (5) umfasst, die zur Kommunikation mit der Benutzereinheit (8) und mit der Aktivierungseinheit (7) ausgebildet ist, wobei die Relaiseinheit (5) und/oder die Benutzereinheit (8) dazu ausgebildet sind, aus einem von der Relaiseinheit (5) empfangenen Signal der Aktivierungseinheit (7) zu bestimmen, ob sich die Relaiseinheit (5) und die Aktivierungseinheit (7) in einem vorbestimmten räumlichen Bereich zueinander befinden, wobei die Benutzereinheit (8) dazu ausgebildet ist, das Steuersignal zur Aktivierung der Steuereinheit (2) nur dann an die Aktivierungseinheit (7) zu senden, wenn sich die Relaiseinheit (5) und die Aktivierungseinheit (7) im genannten vorbestimmten räumlichen Bereich zueinander befinden.

## Beschreibung

Die Erfindung betrifft ein System zur räumlich begrenzten Aktivierung einer Steuereinheit, umfassend eine mit der Steuereinheit elektromechanisch oder elektrisch in Verbindung stehende Aktivierungseinheit, die dazu ausgebildet ist, die Steuereinheit nach Empfang eines Steuersignals zu aktivieren, und eine Benutzereinheit, die dazu ausgebildet ist, das Steuersignal mittelbar oder unmittelbar an die Aktivierungseinheit zu senden.

Aus dem Stand der Technik sind sogenannte "Smart-Buttons" bekannt, die beispielswiese über Smartphone-Applikationen gesteuert werden können. Beispielsweise werden unter den Namen "Smartswitch" und "Switchbot" Produkte vertrieben, die auf bestehende Schalter oder Knöpfe montiert und über Bluetooth per Smartphone-Applikation gesteuert werden können, um die Schalter oder Knöpfe zu betätigen. Ähnliche Produkte bieten auch eine WLAN-Anbindung an. Bei diesen Produkten müssen die ursprünglichen Schalter nicht modifiziert werden.

Andere Smart-Buttons werden direkt an das Stromnetz angeschlossen und ersetzen die ursprünglichen Knöpfe. Diese Smart-Buttons werden ebenfalls über Netzwerke wie WLAN oder Bluetooth gesteuert und können über das Internet bedient werden.

Als Unterstützungstechnologie für körperlich eingeschränkte Personen gibt es Geräte, welche das Bedienen von Geräten mit Hilfe von speziellen Eingabegeräten ermöglichen. Diese sind für gewöhnlich mit einer Smart-Home Applikation gekoppelt, wodurch es eingeschränkten Personen möglich ist, mit der Umgebung besser zu interagieren.

Als Vorteil von Smart-Buttons wird in der Regel angesehen, dass deren Verwendung einem Nutzer grundsätzlich die Kontrolle über alle angebundenen Geräte und Schalter gibt. Dies kann jedoch auch als Nachteil angesehen werden, beispielsweise wenn Gäste oder Geschäftspartner die Smart-Buttons mitbenutzen sollen, da diese nicht die Kontrolle über alle Geräte und Schalter haben sollen.

Ein weiterer Nachteil von Smart-Buttons ist, dass diese im Allgemeinen über das Internet steuerbar sind und damit die gesamte angebundene Infrastruktur nach außen exponieren, was sicherheitstechnische Bedenken aufwirft. Vor allem für größere Betriebe ist es eher unerwünscht, die gesamte Infrastruktur nach außen sichtbar zu machen, da diese auch Ziel eines Hacking-Angriffes sein kann.

Ein Ziel der vorliegenden Erfindung war es, die bereits bekannten Smart-Buttons in eine Richtung weiterzuentwickeln, dass diese in Kombination mit Fahrzeugen wie ferngesteuerten Telepräsenzrobotern eingesetzt werden können. In einer naheliegenden Kombination könnte ein Benutzer mit einer Applikation das Fahrzeug steuern und mit einer anderen Applikation die Smart-Buttons bedienen. Dadurch bleiben jedoch die vorgenannten Nachteile der Smart-Buttons bestehen und überdies ist das Gesamtsystem für den Endbenutzer nur äußerst umständlich zu benutzen.

Es besteht daher ein Bedarf, die ferngesteuerte Betätigung von Steuerelementen wie aus dem Stand der Technik bei Smart-Buttons bekannt weiterzuentwickeln, um diese einerseits in neuen Anwendungen einzusetzen und andererseits sicherer auszugestalten.

Diese Aufgabe wird gelöst durch ein System zur räumlich begrenzten Aktivierung einer Steuereinheit, umfassend eine Aktivierungseinheit, die dazu ausgebildet ist, die Steuereinheit nach Empfang eines Steuersignals zu aktivieren, und eine Benutzereinheit, die dazu ausgebildet ist, das Steuersignal mittelbar oder unmittelbar an die Aktivierungseinheit zu senden, wobei das System ferner eine Relaiseinheit umfasst, die zur Kommunikation mit der Benutzereinheit und mit der Aktivierungseinheit ausgebildet ist, wobei die Relaiseinheit und/oder die Benutzereinheit dazu ausgebildet sind, aus einem von der Relaiseinheit empfangenen Signal der Aktivierungseinheit und/oder aus einem von der Relaiseinheit aufgezeichneten Bild zu bestimmen, ob sich die Relaiseinheit und die Aktivierungseinheit in einem vorbestimmten räumlichen Bereich zueinander befinden, wobei die Benutzereinheit dazu ausgebildet ist, das Steuersignal zur Aktivierung der Steuereinheit nur dann an die Aktivierungseinheit zu senden, wenn sich die Relaiseinheit und die Aktivierungseinheit im genannten vorbestimmten räumlichen Bereich zueinander befinden.

Erfindungsgemäß wird vorgesehen, dass die Steuereinheiten bzw. Aktivierungseinheiten nicht von jedermann, beispielsweise über das Internet, aktiviert werden können, sondern es muss - auch wenn sich der Benutzer außerhalb eines Gebäudes befindet, in dem die Steuereinheit angeordnet ist - eine tatsächliche räumliche Beziehung einer Relaiseinheit des Benutzers zur Aktivierungseinheit und damit zur Steuereinheit bestehen. Angedacht wurde das erfindungsgemäße System ursprünglich für einen entfernten Geschäftspartner, der einen die Relaiseinheit mitführende Telepräsenzroboter in einem Betriebsgebäude eines Geschäftspartners steuert. Ein Telepräsenzroboter kann beispielsweise eine Videoanzeige und/oder einen Lautsprecher umfassen, um ein z.B. mittels der Bedieneinheit aufgezeichnetes Signal eines entfernten Benutzers (z.B. ein Video oder einen Ton) am Telepräsenzroboter auszugeben. Der Benutzer soll den Roboter, insbesondere den Telepräsenzroboter, bevorzugt auch unmittelbar steuern können, indem beispielsweise ein Signal zur Vorwärtsbewegung, Rückwärtsbewegung, Seitwärtsbewegung und/oder Drehung um eine vertikale Achse von der Bedieneinheit an den Telepräsenzroboter gesandt wird. Erfindungsgemäß können nur jene Steuereinheiten aktiviert (z.B. Türen geöffnet) werden, die sich in der Nähe der Präsenzeinheit befinden. Im Zuge der Entwicklung der Erfindung ergaben sich jedoch auch andere, unten näher spezifizierte Einsatzzwecke, sodass die Erfindung nicht auf Telepräsenzroboter beschränkt ist.

Das erfindungsgemäße System ermöglicht insbesondere die besonders einfache Nachrüstung einer bestehenden Infrastruktur, da die Aktivierungseinheiten einfach in der Nähe von bereits bestehenden Steuereinheiten montiert werden können. Die Aktivierungseinheiten können die Steuereinheiten danach elektromechanisch (beispielsweise durch einen ausfahrbaren Finger) oder elektrisch durch eine kabelgebundene Schnittstelle aktivieren. Alternativ können bestehende Steuereinheiten durch solche ersetzt werden, bei denen die Aktivierungseinheiten bereits integriert sind. Die Relaiseinheiten können aber jedenfalls so simpel wie möglich ausgestaltet werden und müssen keine aufwändigen mechanischen Instrumente umfassen. Somit können beispielsweise bereits bestehende Telepräsentroboter als Relaiseinheiten eingesetzt werden, da diese üblicherweise bereits über eine Kommunikationseinheit bzw. Kamera verfügen, die erfindungsgemäß auch mit der Aktivierungseinheit kompatibel ist.

In den bevorzugten Einsatzgebieten ist die Relaiseinheit als bewegliche Einheit, insbesondere als Smartphone, Tablet, Laptop oder Bodycam, ausgebildet. Dadurch kann die Relaiseinheit entweder mitgeführt oder mitgetragen werden und es kann erfindungsgemäß bestimmt werden, wann die Relaiseinheit in die Nähe der Aktivierungseinheit kommt. In anderen Ausführungsformen kann die Relaiseinheit auch statisch ausgeführt werden und die Aktivierungseinheit könnte zusammen mit der Steuereinheit beweglich sein.

Weiters bevorzugt umfasst das erfindungsgemäße System ein steuerbares Fahrzeug, insbesondere einen Telepräsenzroboter oder auch eine Drohne, auf dem die Relaiseinheit mitgeführt ist. Dadurch kann die Relaiseinheit bewegt werden, ohne dass es einer Person bedarf, die die Relaiseinheit trägt. In dieser Ausführungsform ist besonders bevorzugt, wenn die Benutzereinheit dazu ausgebildet ist, sowohl die Aktivierungseinheit als auch das Fahrzeug anzusteuern, bevorzugt über eine gemeinsame Benutzeroberfläche der Benutzereinheit. Der Benutzer erhält somit einerseits die Möglichkeit, das Fahrzeug selbstständig zu bewegen, und andererseits auch die Möglichkeit, Steuereinheiten in der Nähe des Fahrzeugs zu aktivieren. Im Beispiel des Telepräsenzroboters ergibt sich damit ein besonders interaktives Gefühl bei der Steuerung des Telepräsenzroboters durch ein Gebäude. Besonders bevorzugt ist, wenn die Relaiseinheit als eigenständiges Modul auf dem steuerbaren Fahrzeug montiert werden kann, um ein bestehendes Fahrzeug einfach nachzurüsten. Insbesondere kann vorgesehen werden, dass die Relaiseinheit nicht bereits im steuerbaren Fahrzeug integriert ist, sondern auf dieser montiert ist.

Damit die vorgenannte leichte Nachrüstbarkeit einer bestehenden Infrastruktur erzielt wird, können die Steuereinheit und die Aktivierungseinheit als stationäre Einheiten ausgebildet werden, und die Aktivierungseinheit wird besonders bevorzugt räumlich getrennt von der Steuereinheit angeordnet und ist dazu ausgebildet, die Steuereinheit mechanisch zu aktivieren. Dadurch bedarf es keiner elektrischen Anbindung zur Steuereinheit, wodurch die Installation des Systems besonders einfach und ohne Fachkenntnisse erfolgen kann. Alternativ könnte die Aktivierungseinheit auch in der Steuereinheit integriert sein.

Besonders bevorzugt umfasst die Relaiseinheit eine Kamera und ist dazu ausgebildet, von der Kamera aufgezeichnete Bilder mittels Livestream an die Benutzereinheit zu senden. Der Livestream ermöglicht es dem Benutzer, die Umgebung der Relaiseinheit mitzuverfolgen und es kann dadurch unter anderem leicht erkannt werden, welche Steuereinheit betätigt werden kann, z.B. wenn wich ein betätigbarer Liftknopf im Bild bzw. Livestream befindet.

Eine erste Möglichkeit zur Bestimmung, ob sich die Relaiseinheit und die Aktivierungseinheit im genannten vorbestimmten räumlichen Bereich zueinander befinden, besteht darin, dass die Relaiseinheit eine Kommunikationsverbindung mit der Aktivierungseinheit aufbaut. Zu diesem Zweck weisen die Relaiseinheit und die Aktivierungseinheit jeweils einen Kurzreichweiten-Sendeempfänger auf, wobei die Relaiseinheit und/oder die Benutzereinheit dazu ausgebildet sind, durch einen erfolgreichen Kommunikationsaufbau zwischen den Kurzreichweiten-Sendeempfängern darauf zu schließen, dass sich die Relaiseinheit und die Aktivierungseinheit im vorbestimmten räumlichen Bereich zueinander befinden. Dies hat den Vorteil, dass auf eine Auswertung der Bilder einer Kamera der Relaiseinheit - oder auf die Kamera an sich - verzichtet werden kann. Unter "erfolgreichem Kommunikationsaufbau" kann verstanden werden, dass die Kommunikation mit einer vorbestimmten Mindestempfangsstärke durchgeführt wird. Neben klassischen Funkverbindungen über WLAN oder Bluetooth können auch Kommunikationsverbindungen über Infrarot oder Ultraschall aufgebaut werden.

Insbesondere in der vorgenannten Ausführungsform ist bevorzugt, wenn die Relaiseinheit dazu ausgebildet ist, das Steuersignal von der Benutzereinheit zu empfangen und über den Kurzreichweiten-Sendeempfänger an die Aktivierungseinheit zu senden. In diesem Fall könnten dieselben Sendeempfänger eingesetzt werden, um zu erkennen, ob sich die beiden Komponenten im vorbestimmten Bereich zu einander befinden, und um das Steuersignal an die Aktivierungseinheit zu übertragen. Die Aktivierungseinheit muss somit keinen Sendeempfänger aufweisen, der über das Internet oder eine andere weitreichende Kommunikationsverbindung kommuniziert, wodurch die Sicherheit des Systems erhöht wird.

Eine zweite Möglichkeit zur Bestimmung, ob sich die Relaiseinheit und die Aktivierungseinheit im genannten vorbestimmten räumlichen Bereich zueinander befinden, besteht darin, das von der Relaiseinheit aufgezeichnete Bild auszuwerten. In diesem Fall ist die Relaiseinheit oder die Benutzereinheit dazu ausgebildet, die Aktivierungseinheit im von der Relaiseinheit aufgezeichneten Bild, bevorzugt im Livestream, zu erkennen und darauf zu schließen, dass sich die Relaiseinheit und die Aktivierungseinheit im genannten vorbestimmten räumlichen Bereich zueinander befinden, wenn die Aktivierungseinheit im Bild, oder gegebenenfalls im Livestream, ersichtlich ist.

In der vorgenannten Ausführungsform ist besonders vorteilhaft, wenn die Aktivierungseinheit einen maschinenlesbaren optischen Marker, bevorzugt einen QR-Code, umfasst. Dadurch kann einfach bestimmt werden, ob sich die Aktivierungseinheit im aufgezeichneten Bild befindet. An dieser Stelle sei festgehalten, dass die Aktivierungseinheit auch räumlich getrennte Komponenten umfassen kann, sodass ein Sendeempfänger der Aktivierungseinheit beispielsweise unmittelbar an der Steuereinheit vorgesehen wird und der optische Marker in einem vorbestimmten Abstand zur Steuereinheit montiert wird, beispielsweise über einem Liftschalter.

Bei den vorgenannten Ausführungsformen ist bevorzugt, wenn der optische Marker oder eine Kommunikation zwischen den Kurzreichweiten-Sendeempfängern einen Namen, eine eindeutige Identifikation und/oder eine Information über die Position oder Funktion der Steuereinheit und/oder eine eindeutige Identifikation, einen Ladezustand, eine Netzwerkadresse und/oder mögliche Schaltzustände der Aktivierungseinheit und/oder eine eindeutige Identifikation des optischen Markers umfasst. Dadurch sind diese Daten in der Relaiseinheit bzw. der Benutzereinheit bekannt, wodurch dem Benutzer unmittelbar angezeigt werden kann, welche Funktion die betätigbare Steuereinheit übernimmt bzw. wo sich diese befindet. Gegebenenfalls, wenn beispielsweise nur eine eindeutige Identifikation oder ein Name von der Aktivierungseinheit übermittelt bzw. angezeigt wird, kann in der Relaiseinheit und/oder der Benutzereinheit eine Tabelle hinterlegt sein, in der zu dieser Steuereinheit bzw. Aktivierungseinheit verknüpfte Daten hinterlegt sind. Wenn die Kommunikation zwischen Aktivierungseinheit und Relaiseinheit z.B. über Funk stattfindet, kann der optische Marker eine eindeutige Identifikation des optischen Markers anzeigen. In diesem Fall kann beispielsweise mittels einer vorab hinterlegten Datenbank ("Marker Library") festgestellt werden, welcher Marker zu einer gegebenen Aktivierungseinheit gehört.

Weiters bevorzugt ist die Benutzereinheit dazu ausgebildet, eine Darstellung der Umgebung der Relaiseinheit auszugeben, wobei die Darstellung bevorzugt von der Relaiseinheit aufgenommene Bilder (insbesondere ein Livestream) sind, alternativ eine vorab hinterlegte Darstellung der Umgebung, und die Benutzereinheit ist ferner dazu ausgebildet, die Steuereinheit in der Darstellung hervorzuheben, wenn diese über die Benutzereinheit aktivierbar ist. Dadurch ist dem Benutzer besonders leicht ersichtlich, welche Steuereinheit betätigt werden kann.

An dieser Stelle sei festgehalten, dass - auch wenn die Detektion, dass sich die Relaiseinheit und die Aktivierungseinheit im vorbestimmten Bereich befinden, mittels einer Kamera erfolgt - in der Regel eine Funkverbindung zwischen der Relaiseinheit und der Aktivierungseinheit mittels Sendeempfängern vorliegen sollte, um das Steuersignal von der Benutzereinheit an die Relaiseinheit und von dieser an die Aktivierungseinheit zu senden. In einem Spezialfall könnte aber auch keine Funkverbindung oder sonstige bidirektionale Verbindung zwischen der Relaiseinheit und der Aktivierungseinheit vorhanden sein, beispielsweise wenn die einzige Kommunikation zwischen Relaiseinheit und Aktivierungseinheit das Aufnehmen eines Bildes von der Aktivierungseinheit durch die Relaiseinheit ist, um zu erkennen, ob sich die beiden Einheiten im vorbestimmten Bereich zueinander befinden, wobei das Steuersignal von der Benutzereinheit beispielsweise über das Internet an die Aktivierungseinheit gesandt wird.

In einer weiteren bevorzugten Ausführungsform sind die Aktivierungseinheit, die Relaiseinheit und/oder die Benutzereinheit dazu ausgebildet, die Steuereinheit nur dann zu aktivieren, wenn die sich im vorbestimmten räumlichen Bereich zur Steuereinheit befindliche Relaiseinheit eine entsprechende Benutzerberechtigung aufweist. Dadurch wird ermöglicht, dass unterschiedliche Relaiseinheiten bzw. zugeordnete Benutzer unterschiedliche Steuereinheiten betätigen können. Beispielsweise kann ein ständiger Mitarbeiter eines Unternehmens mehr Steuereinheiten betätigen als ein Geschäftspartner, der ein Betriebsgebäude nur temporär besucht.

Die Steuereinheit kann beispielsweise zum Öffnen oder Sperren einer Tür, Rufen eines Lifts oder Einschalten einer Lichtquelle ausgebildet sein, wobei die Steuereinheit sowohl über die Aktivierungseinheit als auch manuell betätigbar ausgeführt werden kann. Dadurch wird eine duale Betätigung der Steuereinheit erzielt, einmal über die entfernte Benutzereinheit und einmal für Personen, die sich in der Nähe der Steuereinheit befinden.

Zurückkommend auf die besonderen Sicherheitsfunktionen des Systems kann weiters vorgesehen werden, dass die Aktivierungseinheit nur über eine Kurzreichweiten-Kommunikationsverbindung ansteuerbar und gegebenenfalls manuell betätigbar ist. Insbesondere soll in dieser besonderen, aber nicht zwingenden Ausführungsform die Aktivierungseinheit nicht mit dem Internet verbunden sein. Wenn die Aktivierungseinheit einen Kurzreichweiten-Sendeempfänger zur Kommunikation mit der Relaiseinheit aufweist, kann optional vorgesehen werden, dass dieser nicht in ein Netzwerk eingebunden ist, das über ein Gateway mit dem Internet verbunden ist.

Vorteilhafte und nicht einschränkende Ausführungsformen der Erfindung werden nachfolgend anhand der Zeichnungen näher erläutert.
Figur 1 zeigt ein System zur räumlich begrenzten Aktivierung einer Steuereinheit in einer ersten Ausführungsform mit einem Telepräsenzroboter.
Figur 2 zeigt ein System zur räumlich begrenzten Aktivierung einer Steuereinheit in einer zweiten Ausführungsform mit einem ferngesteuerten Fahrzeug.
Figur 3 zeigt ein System zur räumlich begrenzten Aktivierung einer Steuereinheit in einer dritten Ausführungsform mit einer Bodycam.
Figur 4 zeigt ein System zur räumlich begrenzten Aktivierung von mehreren Steuereinheiten mit einer statischen Relaiseinheit.

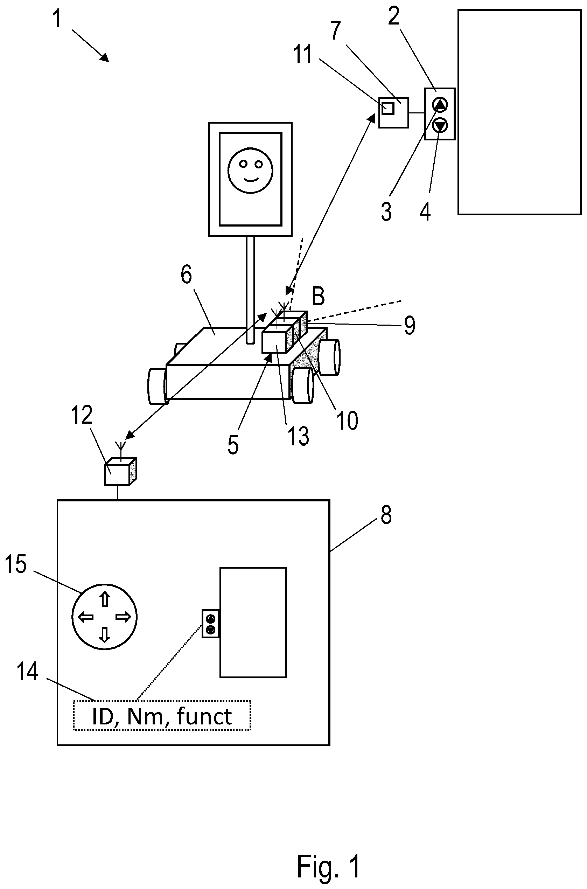

Figur 1 zeigt ein System 1 zur räumlich begrenzten Aktivierung einer Steuereinheit 2, hier eines Lifts. Im dargestellten Beispiel hat die Steuereinheit 2 zwei Knöpfe 3, 4, die jeweils ferngesteuert bedient werden sollen. Die Erfindung ist jedoch nicht auf diese Steuereinheit 2 beschränkt, sondern es könnten andere Steuereinheiten wie ein Knopf zum Öffnen, Aufsperren, Schließen oder Zusperren einer Türe, ein Lichtschalter oder ähnliches zum Einsatz kommen. Üblicherweise wird das System 1 in einem Gebäude eingesetzt, in dem zumindest zwei Steuereinheiten 2 (z.B. zwei Türen oder Lichtschalter) vorgesehen sind, die wie unten beschrieben aktiviert werden können, wobei die Erfindung nicht auf solche Einsatzzwecke beschränkt ist.

Ziel des Systems 1 ist es in einer Ausführungsform, dass ein Benutzer an einem entfernten Ort die Steuereinheit 2 betätigen kann, jedoch nur, wenn sich eine Relaiseinheit 5 in der Nähe der Steuereinheit 2 befindet. In einem konkreten Beispiel ist der Benutzer ein Geschäftspartner, der ein Gebäude mittels eines Telepräsenzroboters 6 besucht, auf welcher die Relaiseinheit 5 angebracht ist. Der Geschäftspartner soll immer nur jene Steuereinheiten 2 bedienen können, die sich in der Nähe des Telepräsenzroboters 6 befinden. Dadurch wird erreicht, dass der Geschäftspartner nicht Zugriff auf alle Steuereinheiten 2 im Gebäude gleichzeitig bekommt, sondern nur auf jene in der Nähe des Telepräsenzroboters 6, was einerseits eine einfachere Übersichtlichkeit für den Benutzer darstellt und andererseits die Sicherheit erhöht.

Um dies umzusetzen, umfasst das System 1 eine Aktivierungseinheit 7 an oder in der Nähe der Steuereinheit 2 und eine Benutzereinheit 8 in der Umgebung des Benutzers. Die Benutzereinheit 8 kann beispielsweise ein Computer mit Monitor, z.B. ein Smartphone oder Laptop, sein. In der Regel werden auf der Benutzereinheit 8 zwei verschiedene Funktionen implementiert, nämlich einmal die Steuerung des Telepräsenzroboters 6 und einmal die Aktivierung der Steuereinheit 2. Beide Funktionen sind bevorzugt in einer einzigen Applikation implementiert.

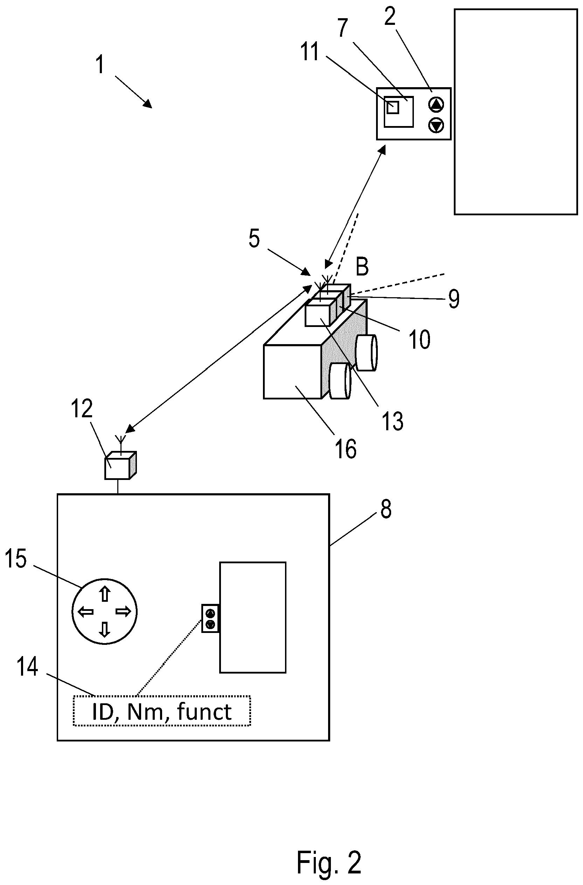

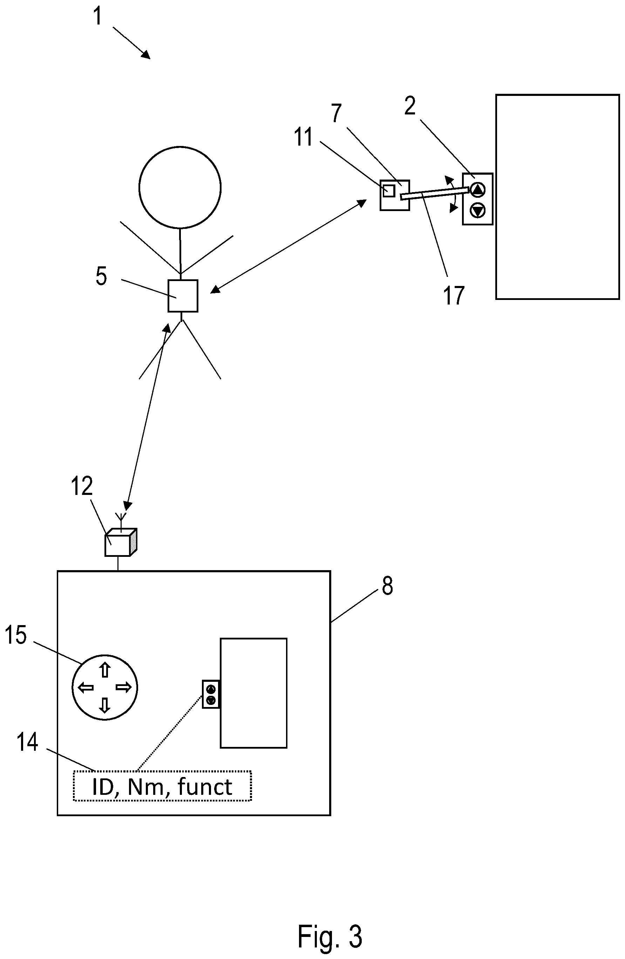

Die Aktivierungseinheit 7 befindet sich beispielsweise neben der Steuereinheit 2 oder kann auch mit dieser als einziges Bauteil ausgeführt sein. Üblicherweise befindet sich die Aktivierungseinheit 7 in einem Maximalabstand von 3 m, 2 m ,1 m oder 0,5 m zur Steuereinheit 2. Im Beispiel von Figur 1 sind die Aktivierungseinheit 7 und die Steuereinheit 2 als gesonderte Bauteile ausgeführt und elektrisch, z.B. über eine Verbindungsleitung oder auch eine kabellose Schnittstelle, verbunden. In der Ausführungsform von Figur 2 sind die Aktivierungseinheit 7 und die Steuereinheit 2 als ein einziges Bauteil ausgeführt und elektrisch miteinander verbunden. In der Ausführungsform von Figur 3 sind die Aktivierungseinheit 7 und die Steuereinheit 2 als gesonderte Bauteile ausgeführt, wobei die Aktivierungseinheit 7 die Steuereinheit 2 mechanisch betätigt, hier über einen verschwenkbaren Finger 17, um einen Schalter der Steuereinheit 2 zu drücken. Im dargestellten Beispiel kann der verschwenkbare Finger 17 beide Knöpfe selektiv betätigen, wobei auch vorgesehen werden könnte, dass die Aktivierungseinheit 7 jeweils einen Finger 17 für einen der beiden Knöpfe aufweist oder sogar eine eigene Aktivierungseinheit 7 mit einem eigenen Finger 17 für jeden der Knöpfe vorgesehen sein könnte.

Im Allgemeinen kann die Aktivierungseinheit 7 einen mechanischen Aktuator umfassen, der beispielsweise dazu ausgebildet ist, einen Knopf der Steuereinheit 2 zu drücken, einen Schieberegler der Steuereinheit 2 zu bewegen und/oder um einen Drehknopf der Steuereinheit 2 zu drehen. Es versteht sich jedoch, dass der mechanische Aktuator nicht auf diese Ausführungsformen eingeschränkt ist.

Um festzustellen, ob sich die Relaiseinheit 5 und die Aktivierungseinheit 7 in einem vorbestimmten räumlichen Bereich zueinander befinden, können verschiedene Methoden eingesetzt werden. In einem ersten Beispiel umfasst die Relaiseinheit 5 eine Kamera 9 mit einem Bildbereich B. Es versteht sich, dass sich der Telepräsenzroboter 6 und die Relaiseinheit 5 eine einzige Kamera 9 teilen können, insbesondere wenn die Relaiseinheit 5 in den Telepräsenzroboter 6 integriert ist. In der Regel werden die von der Kamera 9 aufgezeichneten Bilder als Livestream an die Benutzereinheit 8 gesandt, damit der Benutzer den Telepräsenzroboter 6 oder im Allgemeinen das Fahrzeug, auf dem sich die Relaiseinheit 5 befindet, steuern kann. Der Livestream kann in der Folge dahingehend ausgewertet werden - üblicherweise in der Relaiseinheit 5 oder in der Benutzereinheit 8 - ob die Aktivierungseinheit 7 oder die Steuereinheit 2 im Livestream erkannt werden kann. Ist dies der Fall, so befinden sich die Relaiseinheit 5 und die Aktivierungseinheit 7 in einem vorbestimmten räumlichen Bereich zueinander. Wenn die Relaiseinheit 5 beispielsweise direkt über eine optische Kommunikationsverbindung wie einer Infrarotverbindung mit der Aktivierungseinheit 7 kommuniziert, muss der vorbestimmte räumliche Bereich nicht weiter eingeschränkt werden. Wenn die Relaiseinheit 5 jedoch beispielsweise über eine Funkverbindung mit der Aktivierungseinheit 7 kommuniziert, könnte der vorbestimmte räumliche Bereich auf eine bestimmte Kommunikationsreichweite zwischen diesen Einheiten eingeschränkt werden. Es könnte somit auch vorgesehen werden, dass sich die Relaiseinheit 5 und die Aktivierungseinheit 7 im vorbestimmten räumlichen Bereich zueinander befinden, wenn diese einerseits eine Kommunikationsverbindung aufbauen können und andererseits die Aktivierungseinheit 7 im Bildbereich der Relaiseinheit 5 liegt.

Weiters bevorzugt kann vorgesehen werden, dass der vorbestimmte räumliche Bereich ein vorbestimmter Maximalabstand ist, d.h. die Relaiseinheit 5 und die Aktivierungseinheit 7 befinden sich im vorbestimmten räumlichen Bereich, wenn sie einen Abstand von z.B. maximal 5m, maximal 4m, maximal 3m, maximal 2m oder 1m zueinander einnehmen. Dies ist insbesondere für Telepräsenzroboter vorteilhaft, da ausgeschlossen werden kann, dass ein betriebsfremder Benutzer des Telepräsenzroboters einen weit entfernten Aufzug oder dergleichen ruft und somit Störungen im fremden Betrieb hervorruft. Der Maximalabstand kann z.B. optisch durch die Kamera 9 oder durch eine gemessene Signalstärke zwischen Sendeempfängern der Relaiseinheit 5 und der Aktivierungseinheit 7 bestimmt werden. In anderen Worten führt die Relaiseinheit 5 und/oder die Benutzereinheit 8 eine zusätzliche Auswertung durch, in welchem Abstand sich die Relaiseinheit 5 und der Aktivierungseinheit 7 befinden, wonach ein Schwellwertabgleich durchgeführt wird, ob der aktuelle Abstand der beiden Einheiten geringer ist als der vorbestimmte Maximalabstand (der zu diesem Zweck z.B. als Schwellwert hinterlegt sein kann). Ist dies der Fall, befinden sich die Relaiseinheit 5 und die Aktivierungseinheit 7 im genannten vorbestimmten räumlichen Bereich zueinander, wonach gegebenenfalls das Steuersignal an die Aktivierungseinheit 7 gesandt werden kann.

Um die Bestimmung zu vereinfachen, ob sich die Aktivierungseinheit 7 im Livestream befindet, kann die Aktivierungseinheit 7 beispielsweise einen maschinenlesbaren optischen Marker wie einen QR-Code umfassen, der im Livestream leicht erkennbar ist. Der optische Marker kann beispielsweise auf einer Plakette oder einem Sticker aufgedruckt sein und neben oder auf der Steuereinheit 2 vorgesehen werden. Alternativ oder zusätzlich kann die Aktivierungseinheit ein Display wie ein E-Paper-Display umfassen, auf welchem der optische Marker angezeigt wird.

Alternativ oder zusätzlich kann die Relaiseinheit 5 mittels eines Kurzreichweiten-Sendeempfängers 10 feststellen, ob sich die Relaiseinheit 5 und die Aktivierungseinheit 7 in einem vorbestimmten räumlichen Bereich zueinander befinden. In diesem Fall umfasst auch die Aktivierungseinheit 7 einen entsprechenden Kurzreichweiten-Sendeempfänger 11. Die beiden Kurzreichweiten-Sendeempfänger 10, 11 können beispielsweise über WLAN, Bluetooth, RFID oder einen anderen Kurzreichweiten-Kommunikationsstandard, gegebenenfalls auch Infrarot oder Ultraschall, miteinander kommunizieren. Hierbei kann der Kurzreichweiten-Sendeempfänger 10 und/oder 11 ständig überprüfen, ob eine Kommunikationsverbindung mit dem jeweils anderen Kurzreichweiten-Sendeempfänger 10, 11 aufgebaut werden kann. Ist dies der Fall, so kann darauf geschlossen werden, dass sich die Relaiseinheit 5 und die Aktivierungseinheit 7 in einem vorbestimmten räumlichen Bereich zueinander befinden. Alternativ kann erst darauf geschlossen werden, dass sich die Relaiseinheit 5 und die Aktivierungseinheit 7 in einem vorbestimmten räumlichen Bereich zueinander befinden, wenn die Stärke der Kommunikationsverbindung einen vorbestimmten Schwellwert überschreitet, was beispielsweise über den Received Signal Strength Indicator, RSSI, bestimmt werden kann.

Die tatsächliche Bestimmung, ob sich die Relaiseinheit 5 und die Aktivierungseinheit 7 in einem vorbestimmten räumlichen Bereich zueinander befinden, kann entweder durch die Relaiseinheit 5 selbst oder durch die Benutzereinheit 8 erfolgen. Erfolgt die Bestimmung in der Relaiseinheit 5, entweder durch Auswerten des Livestreams oder der Kommunikationsverbindung, sendet die Relaiseinheit 5 eine entsprechende Nachricht an die Benutzereinheit 8. Alternativ sendet die Relaiseinheit 5 den Livestream bzw. den Inhalt der Kommunikation mit dem Kurzreichweiten-Sendeempfänger 11 der Aktivierungseinheit 7 beispielsweise ohne Vorab-Auswertung an die Benutzereinheit 8, welche die genannte Bestimmung, ob sich die Relaiseinheit 5 und die Aktivierungseinheit 7 in einem vorbestimmten räumlichen Bereich zueinander befinden, durchführt.

Die Kommunikation zwischen der Relaiseinheit 5 und der Benutzereinheit 8 kann über den genannten Kurzreichweiten-Sendeempfänger 10 der Relaiseinheit 5 erfolgen, gegebenenfalls über das Internet mittels eines Gateways, das sich insbesondere in einem WLAN-Netzwerk befinden kann, in welchem der Kurzreichweiten-Sendeempfänger 10 kommuniziert. Die Benutzereinheit 8 kann hierfür einen eigenen Sendeempfänger 12 umfassen. Die Relaiseinheit 5 kann aber auch einen weiteren Sendeempfänger 13 umfassen, der beispielsweise direkt über ein Mobilfunknetzwerk mit dem Sendeempfänger 12 der Benutzereinheit 8 kommuniziert.

Sobald die Benutzereinheit 8 weiß, dass sich die Relaiseinheit 5 und die Aktivierungseinheit 7 im vorbestimmten räumlichen Bereich zueinander befinden, kann die Benutzereinheit 8 dem Benutzer die Möglichkeit geben, die Steuereinheit 2 mittels der Aktivierungseinheit 7 zu aktivieren. In einer Variante kann die Benutzereinheit 8 auf einer Ausgabeeinrichtung wie einem Monitor den Livestream anzeigen, sofern dieser zur Verfügung steht, und die Steuereinheit 2 kann zum Beispiel als interaktiver Knopf 14 im Livestream eingeblendet werden, bevorzugt an jener Stelle, an der sich die Steuereinheit 2 im Livestream befindet. In dieser Variante dient die Kamera 9 somit hauptsächlich zur Übertragung des Livestreams, sodass dieser an der Benutzereinheit 8 angezeigt werden kann. Weiters findet über dem Livestream ein Overlay mit dem interaktiven Knopf 14 statt. Hierbei wird die Bestimmung, ob sich die Relaiseinheit 5 und die Aktivierungseinheit 7 im vorbestimmten Bereich zueinander befinden, üblicherweise durch die Kurzreichweiten-Sendeempfänger 10, 11 der Relaiseinheit 5 und der Aktivierungseinheit 7 durchgeführt.

Wird kein Livestream von der Relaiseinheit 5 bzw. dem Telepräsenzroboter 6 an die Benutzereinheit 8 gesandt, könnte beispielsweise auch eine vorab in der Benutzereinheit 8 hinterlegte Meta-Ansicht des Gebäudes auf der Ausgabeeinrichtung angezeigt werden und die Steuereinheit 2 kann als interaktiver Knopf 14 in dieser Ansicht dargestellt werden. In wiederum anderen Ausführungsformen könnte auch einfach nur eine Schaltfläche auf der Ausgabeeinrichtung der Benutzereinheit 8 angezeigt werden und der Benutzer erhält die Möglichkeit, die Schaltfläche zu betätigen, um die Steuereinheit 2 zu aktivieren. In diesem Zusammenhang sei auch erwähnt, dass auf der Ausgabeeinrichtung überdies eine Schaltfläche 15 zur Steuerung des Telepräsenzroboters 6 (oder im Allgemeinen des Fahrzeugs) ausgegeben werden kann, sodass die Steuerung des Telepräsenzroboters 6 und der Steuereinheit 2 über dieselbe Benutzeroberfläche bzw. Applikation erfolgen können.

In der genannten Variante wird der interaktive Knopf 14 somit an der Benutzereinheit 8 angezeigt, sobald sich die Relaiseinheit 5 in der Nähe der Aktivierungseinheit 7 befindet. Alternativ könnte jedoch auch vorgesehen werden, dass der interaktive Knopf 14 ständig angezeigt wird, aber erst tatsächlich ein Steuersignal an die Aktivierungseinheit 7 sendet, wenn sich die Relaiseinheit 5 und die Aktivierungseinheit 7 im genannten vorbestimmten räumlichen Bereich zueinander befinden. Im Allgemeinem wird davon gesprochen, dass die Benutzereinheit 8 dazu ausgebildet ist, das Steuersignal zur Aktivierung der Steuereinheit 2 nur dann an die Aktivierungseinheit 7 zu senden, wenn sich die Relaiseinheit 5 und die Aktivierungseinheit 7 im genannten vorbestimmten räumlichen Bereich zueinander befinden.

Damit der Benutzer mehr Informationen über die Steuereinheit 2 erhält, kann die Aktivierungseinheit 7 zusätzliche Informationen an die Relaiseinheit 5 bzw. die Benutzereinheit 8 senden. Dies kann entweder über die Kommunikationsverbindung zwischen den Sendeempfängern 10, 11 oder auch über den optischen Marker wie einen QR-Code erfolgen, wenn dieser die Informationen wiedergibt. Die Informationen, die der Benutzereinheit 8 zur Verfügung gestellt werden können, sind beispielsweise ein Name, eine eindeutige Identifikation und/oder eine Information über die Position oder Funktion der Steuereinheit 2 und/oder einen Ladezustand, eine Netzwerkadresse und/oder mögliche Schaltzustände der Aktivierungseinheit 7.

Wenn die Benutzereinheit 8 dem Benutzer die Möglichkeit gibt, die Steuereinheit 2 zu aktivieren, d.h. nachdem festgestellt wurde, dass sich die Relaiseinheit 5 und die Aktivierungseinheit 7 in einem vorbestimmten räumlichen Bereich zueinander befinden, und der Benutzer diese Möglichkeit wahrnimmt, sendet die Benutzereinheit 8 ein entsprechendes Steuersignal an die Aktivierungseinheit 7.

Das Steuersignal kann über die Relaiseinheit 5 an die Aktivierungseinheit 7 gesandt werden, d.h. über den Sendeempfänger 12 der Benutzereinheit 8 an den Sendeempfänger 12 der Relaiseinheit 5 (oder an den Sendeempfänger 10 der Relaiseinheit 5) und in der Folge vom Sendeempfänger 10 der Relaiseinheit 5 an den Sendeempfänger 11 der Aktivierungseinheit 7.. Alternativ oder zusätzlich kann vorgesehen werden, dass die Benutzereinheit 8 unmittelbar mit der Aktivierungseinheit 7 kommuniziert, beispielswiese über ein Mobilfunknetzwerk. Die Aktivierungseinheit 7 kann hierfür gegebenenfalls über einen eigenen Sendeempfänger (nicht dargestellt) verfügen.

Unter Verweis auf Figur 2 ist ersichtlich, dass die Erfindung auch ohne Telepräsenzroboter 6 umsetzbar ist. Im dargestellten Beispiel ist die Relaiseinheit 5 auf einem allgemeinen Fahrzeug 16, beispielsweise einem Reinigungsroboter, vorgesehen. Wie im Zusammenhang mit der Ausführung von Figur 1 erläutert kann auch in diesem Fall eine Kamera 9 vorgesehen werden, die einen Livestream an die Benutzereinheit 8 sendet, um das Fahrzeug 16 zu steuern. Alle für die Ausführungsform von Figur 1 erläuterten Alternativen und Varianten können auch für die Ausführungsform von Figur 2 umgesetzt werden.

Figur 3 zeigt eine Ausführungsform, bei der die Relaiseinheit 5 nicht auf einem Fahrzeug angeordnet ist, sondern unmittelbar von einer Person getragen werden kann. In einer Ausführungsform kann die Relaiseinheit 5 hier wiederum eine Kamera 9 umfassen und dadurch als Bodycam ausgebildet sein. In einer praktischen Umsetzung kann die Bodycam beispielsweise von Sicherheitspersonal getragen werden und der Benutzer, beispielsweise ein Gebäudemanager, an der Benutzereinheit 8 kann vorgeben, wann welche Steuerungseinheit 2 in der Nähe des Sicherheitspersonals geöffnet werden kann. Die Kamera 9 kann wiederum zur Bestimmung des vorgegebenen räumlichen Bereichs und/oder zur Übertragung eines Livestreams an die Benutzereinheit 8 dienen oder ein Video lediglich zu Sicherungszwecken aufnehmen und in einem Speicher hinterlegen.

In einer wieder anderen Ausführungsform kann die Relaiseinheit 5 auch keine Kamera 9 umfassen. Dies kann beispielsweise im Zusammenhang mit einer besonders sicheren Ferndiagnose eingesetzt werden. Beispielsweise soll nur eine autorisierte Fachperson die Befugnis haben, die Steuereinheit 2 zu aktivieren. Wenn die Fachperson die Steuereinheit nicht persönlich aktivieren kann sondern an einem entfernten Ort sitzt, kann eine Hilfskraft die Relaiseinheit 5 in die Nähe der Aktivierungseinheit 7 bringen, wonach die Fachkraft die Steuereinheit 2 aktivieren kann, beispielsweise um Messwerte mittels der Steuereinheit 2 aufzuzeichnen.

In den Ausführungen der Figuren 1 bis 3 ist die Relaiseinheit 5 jeweils als bewegliche Einheit ausgeführt und die Steuereinheiten 2 und die zugehörigen Aktivierungseinheiten 7 sind statisch ausgeführt. Im Allgemeinen können die Steuereinheiten 2 und die zugehörigen Aktivierungseinheiten 7 auch beweglich ausgeführt sein. Beispielsweise könnte ein Monitor beweglich ausgeführt sein und die Steuereinheit 2 ist der Ein-/Ausschalter des Monitors. Die Aktivierungseinheit 7 könnte wie oben beschrieben als Teil der Steuereinheit 2 vorgesehen werden oder neben dieser angebracht werden. Sobald der bewegliche Monitor in die Nähe der Relaiseinheit 5 (die beispielsweise wieder auf einem Telepräsenzroboter 6 vorgesehen werden könnte) verbracht wird, kann der Benutzer die Steuereinheit 2 durch das oben beschriebene Verfahren an der Benutzereinheit 8 betätigen.

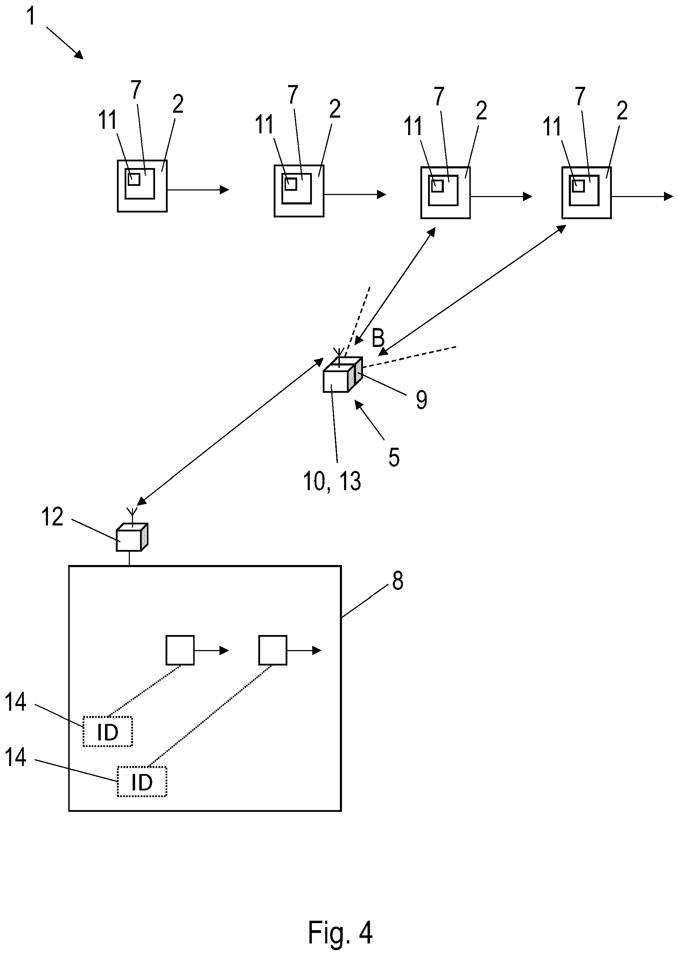

In diesem Zusammenhang könnte die Relaiseinheit 7 auch statisch ausgeführt werden, wie in Figur 4 dargestellt. Eine oder mehrere Steuereinheiten 2 mit Aktivierungseinheiten 7 können beweglich ausgebildet werden und es kann wiederum detektiert werden, ob und welche Steuereinheit 2 sich mit ihrer zugehörigen Aktivierungseinheit 7 in einem vorbestimmten räumlichen Bereich zur Relaiseinheit 5 befinden. Im dargestellten Beispiel wird die Relaiseinheit 5 beispielswiese statisch, z.B. an einem Durchgangsbereich, vorgesehen und passierende Steuereinheiten 2 können ferngesteuert über die Benutzereinheit 8 aktiviert werden. Beispielsweise könnten die Steuereinheiten 2 an Produkten vorgesehen werden und ein Qualitätstester an der Benutzereinheit 8 könnte mittels der Steuereinheiten 2 ein grünes Licht anzeigen lassen, wenn diese eine optische Qualitätsprüfung bestehen. Weiters ist dargestellt, dass die Relaiseinheit 5 nur eine Kommunikationseinrichtung aufweisen kann, die sowohl mit der Benutzereinheit 8 als auch mit der Aktivierungseinheit 7 kommunizieren kann, entweder über denselben oder einen anderen Kommunikationsstandard. Dies kann in allen Ausführungsformen vorgesehen werden.

Da in allen vorgenannten Ausführungsformen Sicherheitsbedenken eine große Rolle spielen, kann überdies vorgesehen werden, Benutzerberechtigungen vorzusehen, um jeweilige Steuereinheiten 2 mittels der Aktivierungseinheiten 7 zu betätigen. Hierzu kann vorgesehen werden, die Aktivierungseinheit 7, die Relaiseinheit 5 und/oder die Benutzereinheit 8 die Steuereinheit 2 nur dann aktivieren, wenn die sich in einem vorbestimmten räumlichen Bereich zur Steuereinheit 2 befindliche Relaiseinheit 5 eine entsprechende Benutzerberechtigung aufweist. Dies hat den Hintergrund, dass beispielsweise nicht jeder Geschäftspartner Zugriff auf jede Steuereinheit 2 im Gebäude erhalten soll. Die Überprüfung der Benutzerberechtigung kann auf unterschiedliche Arten erfolgen. Beispielsweise sind in der Aktivierungseinheit 7, in der Relaiseinheit 5 und/oder in der Benutzereinheit 8 entsprechende Tabellen und/oder Schlüssel hinterlegt. Unter "Benutzerberechtigung der Relaiseinheit 5" wird hierin gleichbedeutend eine Benutzerberechtigung der Benutzereinheit 8 bzw. des Benutzers verstanden.

Wie bereits ausführlich erläutert kann die Steuereinheit 2 nur dann durch die Aktivierungseinheit 7 aktiviert werden, wenn sich die Relaiseinheit 5 und die Aktivierungseinheit 7 in einem vorbestimmten räumlichen Bereich zueinander befinden. Als Beispiel für den vorbestimmten räumlichen Bereich wurde bereits angeführt, dass sich in diesem Bereich die Aktivierungseinheit 7 im Blickfeld B der Kamera 9 der Relaiseinheit 5 befindet und/oder dass in diesem Bereich eine Kommunikationsverbindung zwischen den Sendeempfängern 10, 11 der Relaiseinheit 5 und der Aktivierungseinheit 7 durchführbar ist, gegebenenfalls mit einer Mindeststärke der Kommunikationsverbindung. Aus den vorgenannten Beispielen ist ersichtlich, dass der vorbestimmte räumliche Bereich nicht zwingend durch einen Mindestabstand definiert ist, insbesondere wenn die Aktivierungseinheit 7 im Blickfeld B der Kamera 9 der Relaiseinheit 5 liegen soll. Es kann jedoch alternativ oder insbesondere zusätzlich vorgesehen werden, dass sich die Relaiseinheit 5 und die Aktivierungseinheit 7 in einem vorbestimmten Mindestabstand zueinander befinden sollen, damit sie sich im vorbestimmten räumlichen Bereich zueinander befinden. Der Mindestabstand kann beispielsweise über optische Messverfahren, Radiowellen oder GPS-Daten bestimmt werden. Besonders bevorzugt kann der Mindestabstand über ein sogenanntes "time-of-flight"-Verfahren bestimmt werden.

Wie bereits erwähnt kann das System 1 auch zumindest zwei Steuereinheiten 2 umfassen, die jeweils eine Aktivierungseinheit 7 umfassen. Je nach Anordnung der Steuereinheiten 2 bzw. Aktivierungseinheiten 7 kann vorkommen, dass sich eine Relaiseinheit 5 im vorbestimmten räumlichen Bereich beider Steuereinheiten 2 bzw. Aktivierungseinheiten 7 befindet und der Benutzer an der Benutzereinheit 8 dadurch beide Steuereinheiten 2 aktivieren könnte. Auch können sich im System 1 mehrere Relaiseinheiten 5 befinden, beispielsweise wenn mehrere Telepräsenzroboter 6 mit jeweils einer Relaiseinheit 5 bereitgestellt werden. In diesem Fall wird in der Regel für jede Relaiseinheit 5 eine eigene Benutzereinheit 8 vorgesehen.

Eine weitere Anwendungsmöglichkeit für das vorliegende System 1 ist der Einsatz für körperlich eingeschränkte Personen. In diesem Fall ist die Relaiseinheit 5 beispielsweise auf einem Rollstuhl montiert, der das Fahrzeug bildet. Auch die Benutzereinheit 8 ist auf diesem Rollstuhl vorgesehen, sodass die im Rollstuhl befindliche Person eine Steuereinheit 2 bedienen kann, sobald sie sich in der Nähe der Steuereinheit befindet. Dies hat den Vorteil der einfacheren Übersichtlichkeit, da der Benutzer immer nur jene Steuereinrichtungen 2 angezeigt bekommt bzw. aktivieren kann, die sich in seiner Nähe befinden. Zusätzlich ist der erhöhte Sicherheitsfaktor des Systems 1 weiterhin gegeben, da die Aktivierungseinheiten 7 nicht von außerhalb des Gebäudes angesteuert werden können.

## Patentansprüche

1. System (1) zur räumlich begrenzten Aktivierung einer Steuereinheit (2), umfassend eine Aktivierungseinheit (7), die dazu ausgebildet ist, die Steuereinheit (2) nach Empfang eines Steuersignals zu aktivieren, und
eine Benutzereinheit (8), die dazu ausgebildet ist, das Steuersignal mittelbar oder unmittelbar an die Aktivierungseinheit (7) zu senden,
**dadurch gekennzeichnet, dass**
das System (1) ferner eine Relaiseinheit (5) umfasst, die zur Kommunikation mit der Benutzereinheit (8) und mit der Aktivierungseinheit (7) ausgebildet ist,
wobei die Relaiseinheit (5) und/oder die Benutzereinheit (8) dazu ausgebildet sind, aus einem von der Relaiseinheit (5) empfangenen Signal der Aktivierungseinheit (7) und/oder aus einem von der Relaiseinheit (5) aufgezeichneten Bild zu bestimmen, ob sich die Relaiseinheit (5) und die Aktivierungseinheit (7) in einem vorbestimmten räumlichen Bereich zueinander befinden,
wobei die Benutzereinheit (8) dazu ausgebildet ist, das Steuersignal zur Aktivierung der Steuereinheit (2) nur dann an die Aktivierungseinheit (7) zu senden, wenn sich die Relaiseinheit (5) und die Aktivierungseinheit (7) im genannten vorbestimmten räumlichen Bereich zueinander befinden.

2. System (1) nach Anspruch 1, wobei die Relaiseinheit (5) als bewegliche Einheit, insbesondere als Smartphone, Tablet, Laptop oder Bodycam, ausgebildet ist.

3. System (1) nach Anspruch 2, ferner umfassend ein Fahrzeug (16), insbesondere einen Telepräsenzroboter (6), auf dem die Relaiseinheit (5) mitgeführt ist.

4. System (1) nach Anspruch 3, wobei die Benutzereinheit (8) dazu ausgebildet ist, sowohl die Aktivierungseinheit (7) als auch das Fahrzeug (16) anzusteuern, bevorzugt über eine gemeinsame Benutzeroberfläche der Benutzereinheit (8).

5. System (1) nach einem der Ansprüche 1 bis 4, wobei die Steuereinheit (2) und die Aktivierungseinheit (7) als stationäre Einheiten ausgebildet sind, und die Aktivierungseinheit (7) bevorzugt räumlich getrennt von der Steuereinheit (2) angeordnet und dazu ausgebildet ist, die Steuereinheit (2) mechanisch zu aktivieren.

6. System (1) nach einem der Ansprüche 1 bis 5, wobei die Relaiseinheit (5) und die Aktivierungseinheit (7) jeweils einen Kurzreichweiten-Sendeempfänger (10, 11) aufweisen, wobei die Relaiseinheit (5) und/oder die Benutzereinheit (8) dazu ausgebildet sind, durch einen erfolgreichen Kommunikationsaufbau zwischen den Kurzreichweiten-Sendeempfängern (10, 11) darauf zu schließen, dass sich die Relaiseinheit (5) und die Aktivierungseinheit (7) im vorbestimmten räumlichen Bereich zueinander befinden.

7. System (1) nach einem der Ansprüche 1 bis 6, wobei die Relaiseinheit (5) und die Aktivierungseinheit (7) jeweils einen Kurzreichweiten-Sendeempfänger (10, 11) aufweisen, und die Relaiseinheit (5) dazu ausgebildet ist, das Steuersignal von der Benutzereinheit (8) zu empfangen und über den Kurzreichweiten-Sendeempfänger (10) an die Aktivierungseinheit (7) zu senden.

8. System (1) nach einem der Ansprüche 1 bis 7, wobei die Relaiseinheit (5) eine Kamera (9) umfasst und dazu ausgebildet ist, von der Kamera (9) aufgezeichnete Bilder mittels Livestream an die Benutzereinheit (8) zu senden.

9. System (1) nach einem der Ansprüche 1 bis 8, wobei die Relaiseinheit (5) oder Benutzereinheit (8) dazu ausgebildet ist, die Aktivierungseinheit (7) im von der Relaiseinheit (5) aufgezeichneten Bild, bevorzugt im Livestream, zu erkennen und darauf zu schließen, dass sich die Relaiseinheit (5) und die Aktivierungseinheit (7) im genannten vorbestimmten räumlichen Bereich zueinander befinden, wenn die Aktivierungseinheit (7) im Bild, oder gegebenenfalls im Livestream, ersichtlich ist.

10. System (1) nach einem der Ansprüche 1 bis 9, wobei die Aktivierungseinheit (7) einen maschinenlesbaren optischen Marker, bevorzugt einen QR-Code, umfasst.

11. System (1) nach einem der Ansprüche 8 bis 10, wobei der optische Marker oder eine Kommunikation zwischen den Kurzreichweiten-Sendeempfängern (10, 11) einen Namen, eine eindeutige Identifikation und/oder eine Information über die Position oder Funktion der Steuereinheit (2) und/oder eine eindeutige Identifikation, einen Ladezustand, eine Netzwerkadresse und/oder mögliche Schaltzustände der Aktivierungseinheit (7) und/oder eine eindeutige Identifikation des optischen Markers umfasst.

12. System (1) nach einem der Ansprüche 1 bis 11, wobei die Benutzereinheit (8) dazu ausgebildet ist, eine Darstellung der Umgebung der Relaiseinheit (5) auszugeben, wobei die Darstellung bevorzugt von der Relaiseinheit (5) aufgenommene Bilder sind, und ferner dazu ausgebildet ist, die Steuereinheit (2) in der Darstellung hervorzuheben, wenn diese über die Benutzereinheit (8) aktivierbar ist.

13. System (1) nach einem der Ansprüche 1 bis 12, wobei die Aktivierungseinheit (7), die Relaiseinheit (5) und/oder die Benutzereinheit (8) dazu ausgebildet sind, die Steuereinheit (2) nur dann zu aktivieren, wenn die sich im vorbestimmten räumlichen Bereich zur Steuereinheit (2) befindliche Relaiseinheit (5) eine entsprechende Benutzerberechtigung aufweist.

14. System (1) nach einem der Ansprüche 1 bis 13, wobei das System (1) ferner die Steuereinheit (2) umfasst, die bevorzugt zum Öffnen oder Sperren einer Tür, Rufen eines Lifts oder Einschalten einer Lichtquelle ausgebildet ist, wobei die Steuereinheit (2) sowohl über die Aktivierungseinheit (7) als auch manuell betätigbar ausgeführt ist.

15. System (1) nach einem der Ansprüche 1 bis 14, wobei die Aktivierungseinheit (7) nur über eine Kurzreichweiten-Kommunikationsverbindung ansteuerbar und gegebenenfalls manuell betätigbar ist.
